# EUROPÄISCHE PATENTSCHRIFT

(11) **EP 0 507 788 B1**
(45) Veröffentlichungstag und Bekanntmachung des Hinweises auf die Patenterteilung: **18.05.1994**
(21) Anmeldenummer: 91900172.7
(22) Anmeldetag: 16.12.1990
(51) Int. Cl.: G06K 15/12, H04N 1/04, G02B 27/00

(54) **VERFAHREN UND EINRICHTUNG ZUR KORREKTUR VON POSITIONSFEHLERN EINES ABGELENKTEN LICHTSTRAHLS**
PROCESS AND DEVICE FOR CORRECTING POSITIONAL ERRORS IN A DEFLECTED LIGHT BEAM
PROCEDE ET DISPOSITIF POUR LA CORRECTION D'ERREURS DE POSITION D'UN RAYON LUMINEUX DIFFRACTE

(30) Priorität: 05.01.1990 DE 4000166
(43) Veröffentlichungstag der Anmeldung: 14.10.1992
(73) Patentinhaber: LINOTYPE-HELL AG, D-24023 Kiel (DE)
(72) Erfinder: ZELENKA, Thomas, D-2312 Mönkeberg (DE)
(86) Internationale Anmeldenummer: DE9000966
(87) Internationale Veröffentlichungsnummer: WO9110210

(56) Entgegenhaltungen:
- EP-A- 0 054 170
- US-A- 4 270 131
- US-A- 4 310 757
- US-A- 4 644 160

## Beschreibung

Die Erfindung bezieht sich auf das Gebiet der elektronischen Reproduktionstechnik und betrifft ein Verfahren und eine Einrichtung zur Korrektur von Positionsfehlern eines punkt- und zeilenweise durch ein Ablenksystem mit mindestens einer Spiegelfläche, insbesondere durch einen Vielflächen-Drehspiegel, abgelenkten Lichtstrahls in einem Flying-Spot-Laserscanner.

Flying-Spot-Laserscanner finden in der elektronischen Reproduktionstechnik als Eingabe-Scanner zur punkt- und zeilenweisen Abtastung von Vorlagen oder als Ausgabe-Scanner zur Aufzeichnung von Informationen Anwendung. Bei einem Eingabe-Scanner wird ein Lichtstrahl mittels eines Ablenksystems punkt- und zeilenweise über eine Vorlage geführt, und das von der Vorlage durchgelassene oder reflektierte Abtastlicht in einem optoelektronischen Wandler in ein Bildsignal umgewandelt. Bei einem Ausgabe-Scanner (Recorder) wird ein von einem Bildsignal intensitätsmodulierter Lichtstrahl mittels eines Ablenksystems punkt- und zeilenweise über ein Aufzeichnungsmedium geführt. Vorlage oder Aufzeichnungsmedium, nachfolgend mit Fläche bezeichnet, bewegen sich dabei kontinuierlich oder schrittweise senkrecht zur Zeilenrichtung des abgelenkten Lichtstrahls.

Um eine hohe Reproduktionsqualität zu erzielen, muß bei Vorlagen-Abtastung und Aufzeichnung eine hohe Ablenkgenauigkeit des Lichtstrahls eingehalten werden. Unter anderem wird gefordert, daß die Abstände der Zeilen gleich sind, und daß die Zeilenanfänge und Zeilenenden auf der Fläche genau auf senkrecht zur Zeilenrichtung verlaufenden Linien liegen.

Aufgrund optisch-geometrischer Fehler eines Ablenksystems entstehen Positionsfehler des abgelenkten Lichtstrahls auf der Fläche, wodurch die Genauigkeit beeinträchtigt wird.

Ursache solcher optisch-geometrischen Fehler sind z. B. Toleranzen bei der Herstellung des Ablenksystems und Mängel im mechanischen Aufbau.

Nicht parallel zur Drehachse des Ablenksystems angeordnete Spiegelflächen und eine instabile Lage der Drehachse verursachen Positionsfehler des Lichtstrahls quer zur Zeilenrichtung und damit ungleiche Zeilenabstände auf der Fläche. Unterschiedliche Winkel zwischen aneinanderstoßenden Spiegelflächen verursachen Positionsfehler in Zeilenrichtung und damit ungleiche Zeilenanfänge und Zeilenenden auf der Fläche. Weitere Positionsfehler können durch unebene Spiegelflächen entstehen. Diese Positionsfehler, die sich durch eine ungleichförmige Winkelgeschwindigkeit des Ablenksystems und damit durch Verzerrungen innerhalb der Zeilen bemerkbar machen, sind besonders störend, wenn eine hohe Genauigkeit bzw. Reproduktionsqualität gefordert wird.

Aus der Druckschrift EP-B-0054170 ist bereits eine Einrichtung zur Korrektur eines durch ein Ablenksystem in Form eines Vielflächen-Drehspiegels abgelenkten Lichtstrahls in einem Flying-Spot-Laserscanner bekannt. Bei der bekannten Einrichtung sind zwischen dem Lasergenerator zur Erzeugung des Lichtstrahls und dem Ablenksystem Korrektur-Ablenker für den Lichtstrahl zur Kompensation der durch das Ablenksystem verursachten Positionsfehler des Lichtstrahls angeordnet. In einer Meß-Phase vor dem eigentlichen Betrieb werden die Positionsfehler des Lichtstrahls ausgemessen. Dann werden Korrekturwerte zur Ansteuerung der Korrektur-Ablenker erzeugt und die Korrekturwerte unter laufender Überprüfung der Positionsfehler so lange geändert, bis die Positionsfehler durch die Korrektur-Ablenker kompensiert sind. Die zur Kompensation der Positionsfehler erforderlichen Korrekturwerte werden gespeichert und zur laufenden Kompensation der Positionsfehler während des eigentlichen Betriebes in Synchronismus mit der Drehbewegung des Ablenksystems ausgegeben. Die Korrektur-Ablenker sind piezoelektrisch angetriebene Kippspiegel oder akustooptische Ablenker.

Die bekannte Einrichtung hat den Nachteil, daß dort zur Kompensation der Positionsfehler zusätzliche Korrektur-Ablenker erforderlich sind, und daß die piezoelektrisch angetriebenen Kippspiegel oder akustooptischen Ablenker Eigenfehler aufweisen, die keine optimale Korrektur zulassen. Ein piezo-elektrisch angetriebener Kippspiegel weist beispielsweise eine nichtlineare, mit Hysterese behaftete Charakteristik auf und erreicht wegen seiner relativ großen Masse nur eine begrenzte Auslenkgeschwindigkeit. Hinzu kommt, daß die Temperaturabhängigkeit und das Altern der Piezokeramik einen häufigeren Abgleich der Einrichtung notwendig machen.

Bei einem akustooptischen Ablenker ändert sich in ungünstiger Weise der optische Wirkungsgrad mit dem Ablenkwinkel, und ein akustooptischer Ablenker erlaubt nur einen kleinen Strahldurchmesser, wodurch sein Anwendungsbereich eingeengt wird. Außerdem ist für den Betrieb eines solchen akustooptischen Ablenkers eine relativ aufwendige Frequenzsteuerung erforderlich.

Aufgabe der vorliegenden Erfindung ist es daher, ein Verfahren und eine Einrichtung zur Korrektur von Positionsfehlern eines durch ein Ablenksystem mit mindestens einer Spiegelfläche punkt- und zeilenweise über eine Fläche abgelenkten Lichtstrahls anzugeben, bei denen die genannten Nachteile durch Verzicht auf zusätzliche Korrektur-Ablenker vermieden und somit hohe Korrekturgenauigkeiten erzielt werden.

Diese Aufgabe wird in bezug auf das Verfahren durch die im Anspruch 1 angegebenen Merkmale und in bezug auf die Einrichtung durch die im Anspruch 14 angegebenen Merkmale gelöst. Vorteilhafte Weiterbildungen sind in den Unteransprüchen angegeben.

Aus der DE-B-3445751 ist eine Einrichtung zum Halten mehrerer Lichtstrahlen bezüglich einer vorgegebenen optischen Achse bekannt, bei der die Lichtstrahlen von Laserdioden erzeugt werden und bei der Lageabweichungen des Lichtstrahls gemessen und die festgestellten Lageabweichungen durch Verschieben der Laserdioden quer zu den optischen Achsen der Lichtstrahlen ausgeregelt werden. Dieser Einrichtung liegt eine andere Aufgabenstellung zugrunde. Mit Hilfe der bekannten Einrichtung werden nämlich die Positionen der Lichtstrahlen so eingestellt, daß sie auf einen Punkt fokussiert werden, um einen Lichtstrahl höherer Leistung zu erhalten oder es werden mehrere Lichtstrahlen lagemäßig so geregelt, daß sie gleiche Abstände zueinander aufweisen. Die bekannte Einrichtung ist aber nicht dazu geeignet, durch ein Ablenksystem, insbesondere durch einen Vielflächen-Drehspiegel, verursachte Positionsfehler eines Lichtstrahls mit hoher Genauigkeit zu kompensieren.

Die Erfindung wird im folgenden anhand der Figuren näher erläutert:

Es zeigen:
- Fig. 1: den prinzipiellen Aufbau eines Flying-Spot-Laserscanners als Flach bett-Gerät mit einer Einrichtung zur Korrektur von Positionsfehlern;
- Fig. 2: ein weiteres Ausführungsbeispiel für eine Einrichtung zur Korrektur von Positionsfehlern;
- Fig. 3: eine vorteilhafte Weiterbildung der Einrichtung zur Korrektur von Positionsfehlern und
- Fig. 4: eine andere vorteilhafte Weiterbildung.

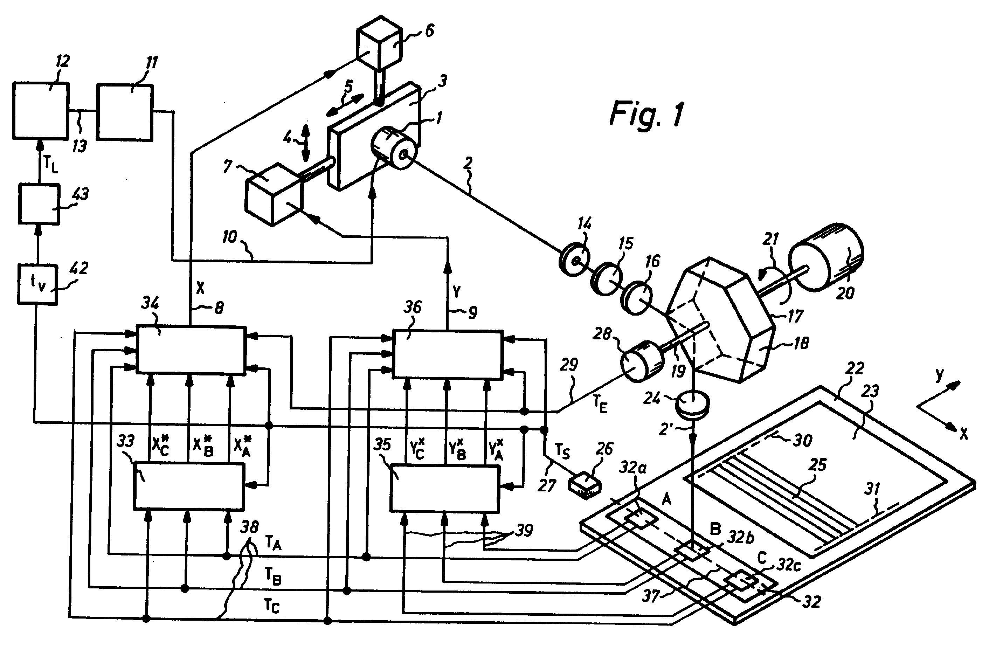

Fig. 1 zeigt den prinzipiellen Aufbau eines Flying-Spot-Laserscanners, der im Ausführungsbeispiel als Flachbett-Gerät ausgebildet ist und als Ausgabe-Scanner arbeitet.

Eine Laserdiode 1, z. B. vom Typ HL7801E der Fa. Hitachi, erzeugt einen Lichtstrahl 2. Die Laserdiode 1 ist auf einem Schlitten 3 angeordnet, der sich koordinatenmäßig in zwei senkrecht aufeinander stehenden Richtungen 4 und 5 und senkrecht zum austretenden Lichtstrahl 2 verschieben läßt. Eine X-Stellstufe 6 und eine Y-Stellstufe 7 enthalten jeweils ein piezoelektrisches Antriebselement (Piezostapel), z. B. vom Typ PZL 030 der Fa. Burleigh, und einen Hochspannungsgenerator zur elektrischen Ansteuerung des Antriebselements, das unter Ausnutzung des piezoelektrischen Effekts eine von der elektrischen Ansteuerung abhängige Längenänderung erfährt. Die Antriebselemente sind mechanisch derart mit dem Schlitten 3 gekoppelt, daß die Längenänderungen der Antriebselemente in entsprechende Bewegungen des Schlittens 3 in die Richtungen 4 und 5 umgesetzt werden, wobei die Beträge der Bewegungen von X-Korrekturwerten und Y-Korrekturwerten auf Leitungen 8 und 9 abhängig sind.

Die Laserdiode 1 wird über eine Leitung 10 von einem Treiberstrom gespeist, der in einer Treiberstufe 11 erzeugt wird. Die zur Aufzeichnung benötigten Aufzeichnungsdaten sind in einem Digitalspeicher 12 abgelegt und werden zur Informationsaufzeichnung aus dem Digitalspeicher 12 abgerufen und über eine Leitung 13 der Treiberstufe 11 zugeführt. In der Treiberstufe 11 wird der Treiberstrom für die Laserdiode 1 in Abhängigkeit von den zugeführten Aufzeichnungsdaten geregelt und dadurch der aus der Laserdiode 1 austretende Lichtstrahl 2 intensitätsmoduliert.

Der intensitätsmodulierte Lichtstrahl 2 fällt durch eine Lochblende 14 zur Ausschaltung parasitärer Lichtstrahlen und durch Linsen 15 und 16 zur Aufweitung des Lichtstrahls 2 auf einen rotierenden Vielflächen-Drehspiegel 17 (Polygon-Spiegel) mit n Spiegelflächen 18. Die Drehachse 19 des Vielflächen-Drehspiegels 17, die senkrecht zur optischen Achse des Lichtstrahls 2 ausgerichtet ist, wird von einem Motor 20 in Richtung eines Pfeiles 21 mit konstanter Winkelgeschwindigkeit angetrieben. Auf einem Flachbett-Aufzeichnungsträger 22 ist ein Aufzeichnungsmedium 23, z. B. in Form eines Filmes, angeordnet. Durch die Rotation des Vielflächen-Drehspiegels 17 wird der von den Spiegelflächen 18 reflektierte und durch eine f-0-Korrekturlinse 24 auf das Aufzeichnungsmedium 23 fokussierte Lichtstrahl 2' laufend in Zeilenrichtung (Aufzeichnungsrichtung ; X-Richtung) über das Aufzeichnungsmedium 23 ausgelenkt. Gleichzeitig führt der Flachbett-Aufzeichnungsträger 22 eine senkrecht zur Zeilenrichtung gerichtete schrittweise oder kontinuierliche Vorschubbewegung (Y-Richtung) aus. Auf diese Weise belichtet der durch den Vielflächen-Drehspiegel 17 abgelenkte Lichtstrahl 2' auf dem Aufzeichnungsmedium 23 nebeneinanderliegende Zeilen 25. Da der Vielflächen-Drehspiegel 17 im dargestellten Ausführungsbeispiel n = 6 Spiegelflächen 18 aufweist, werden somit während einer Spiegelumdrehung sechs Zeilen 25 aufgezeichnet.

Ein außerhalb des Flachbett-Aufzeichnungsträgers 22 und in der Ablenkebene des Lichtstrahls 2' angeordneter optoelektronischer Impulsgeber 26 erzeugt bei jedem einfallenden Lichtstrahl 2' einen Startimpuls (T_{S}) auf einer Leitung 27, also bei n = 6 Spiegelflächen 18 sechs Startimpulse (T_{S}) pro Spiegelumdrehung. Ein weiterer Impulsgeber 28, der mit der Drehachse 19 des Vielflächen-Drehspiegels 17 gekoppelt ist, erzeugt jeweils nach einer Spiegelumdrehung einen Endimpuls (T_{E}) auf einer Leitung 29.

Wie bereits in der Beschreibungseinleitung erwähnt, verursachen nicht parallel zur Drehachse 19 des Vielflächen-Drehspiegels 17 ausgerichtete Spiegelflächen 18 und eine instabile Lage der Drehachse 19 auf dem Aufzeichnungsmedium 23 Positionsabweichungen des aufzeichnenden Lichtstrahls 2' senkrecht zur Zeilenrichtung, die im folgenden kurz mit Y-Positionsfehler bezeichnet werden und ungleiche Abstände zwischen den Zeilen 25 zur Folge haben.

Unterschiedliche Winkel zwischen aneinanderstoßenden Spiegelflächen 18 verursachen von Zeile zu Zeile unterschiedliche Zeilenanfänge und Zeilenenden. Unebenheiten in den Spiegelflächen 18 führen zu Abweichungen des aufzeichnenden Lichtstrahls 2' von denjenigen Positionen in Zeilenrichtung, die er eigentlich zu bestimmten Zeiten einnehmen sollte, d. h. zu einer ungleichförmigen Winkelgeschwindigkeit des Lichtstrahls. Diese Abweichungen, im folgenden X-Positionsfehler genannt, haben Verzerrungen innerhalb der Zeilen 25 zur Folge.

Für eine gute Aufzeichnungsqualität wird aber gefordert, daß die Zeilen 25 auf einer gedachten Linie 30 beginnen, die senkrecht zur Zeilenrichtung verläuft, und auf einer dazu parallelen Linie 31 enden, und daß die Zeilenabstände konstant sind.

Zur Messung der X-Positionsfehler und der Y-Positionsfehler ist eine Meßanordnung 32 vorgesehen.

Die Korrektureinrichtung zur Kompensation der X-Positionsfehler weist eine X-Meßstufe 33, einen X-Korrekturwertgeber 34 und ein X-Korrekturglied auf, das aus der X-Stellstufe 6 und dem damit mechanisch gekoppelten Schlitten 3 besteht.

Die Korrektureinrichtung zur Kompensation der Y-Positionsfehler weist eine Y-Meßstufe 35, einen Y-Korrekturwertgeber 36 und ein entsprechendes Y-Korrekturglied, bestehend aus der Y-Stellstufe 7 und dem Schlitten 3 auf.

Die Meßanordnung 32 in Form einer Meßschiene weist innerhalb der Nutzungsbreite des Flachbett-Aufzeichnungsträgers 22 eine Anzahl Meßorgane zur Feststellung der Strahlabweichungen in X- und Y-Richtung auf, die auf einer Referenzlinie 37 nebeneinander angeordnet sind. Im Ausführungsbeispiel sind drei Meßorgane 32a, 32b und 32c an den Meßpunkten A, B und C vorgesehen, wobei das Meßorgan 32a im Bereich des Zeilenbeginns, das Meßorgan 32c im Bereich des Zeilenendes und das Meßorgan 32b etwa in der Zeilenmitte angeordnet ist.Die Meßanordnung 32 ist fester Bestandteil des Flachbett-Aufzeichnungsträgers 22. Alternativ dazu kann die Meßanordnung 32 lediglich zur Messung der Positionsfehler auf dem Flachbett-Aufzeichnungsträger 22 befestigt oder anstelle des Flachbett-Aufzeichnungsträgers 22 in den Strahlengang eingeschoben werden.

Die Positionsfehler werden in einer vor der Aufzeichnung liegenden Meß-Phase bestimmt, in der der Vielflächen-Drehspiegel 17 rotiert und der Flachbett-Aufzeichnungsträger 22 so weit in Y-Richtung verschoben wird, daß die Meßorgane 32a,32b und 32c, wie in Figur 1 dargestellt, in der Ablenkebene des Lichtstrahls 2' liegen. Zur Bestimmung der X-Positionsfehler werden für den Lichtstrahl 2' Laufzeit-Differenzmessungen zwischen dem Impulsgeber 26 und dem Meßorgan 32a (Δ t₁), zwischen den Meßorganen 32a und 32b (Δt₂) sowie zwischen den Meßorganen 32b und 32c (Δt₃) durchgeführt. Die in dem Impulsgeber 26 und den Meßorganen 32a,32b und 32c bei Überstreichen des Lichtstrahls 2' gemessenen Impulse werden der X-Meßstufe 33 über die Leitung 27 und die Leitung 38 zugeführt und dort zur Differenzmessung verwendet. Die gemessenen Zeitdifferenzen (Δt₁,Δt₂ und Δt₃) werden in die Meßwert-Tripel X*_{A}, X*_{B} und X*_{C} für jede Spiegelfläche 18 des Vielflächen-Drehspiegels 17 umgesetzt.

Die in den einzelnen Meßpunkten A,B und C entlang der Zeilenrichtung von den Meßorganen 32a,32b und 32c gemessenen Y-Positionsfehler werden über Leitungen 39 an die Y-Meßstufe 35 übertragen und dort in die Meßwert-Tripel Y*_{A}, Y*_{B} und Y*_{C} für jede Spiegelfläche 18 des Vielflächen-Drehspiegels 17 umgesetzt.

In einer sich an die Meß-Phase anschließenden Korrektur-Phase erzeugen der X-Korrekturwertgeber 34 und der Y-Korrekturwertgeber 36 sich in Richtung der erforderlichen Korrektur ändernde Korrekturwert-Tripel X_{A}, X_{B} und X_{C} sowie Y_{A}, Y_{B} und Y_{C}, die seriell und in Übereinstimmung mit der sich gerade im Strahlengang des Lichtstrahls 2 befindlichen Spiegelfläche 18 des Vielflächen-Drehspiegels 17 über die Leitungen 8 und 9 an die X-Stellstufe 6 und die Y-Stellstufe 7 gegeben werden. Die Stellstufen 6 und 7 verschieben den Schlitten 3 in die Richtungen 4 und 5, entsprechend den von dem X-Korrekturwertgeber 34 und dem Y-Korrekturwertgeber 36 ausgegebenen Korrekturwerten. Dadurch wird der abgelenkte Lichtstrahl 2' zwecks Korrektur seiner X-Positionsfehler durch eine Verschiebung der Laserdiode 1 in Richtung des Pfeiles 4 in Zeilenrichtung und zwecks Korrektur seiner Y-Positionsfehler durch Verschiebung der Laserdiode 1 in Richung des Pfeiles 5 senkrecht zur Zeilenrichtung abgelenkt.

Die schrittweise Korrektur der Positionsfehler wird so lange fortgesetzt bis die gemessenen Abweichungen kompensiert sind. Die dabei erreichten Korrekturwerte werden in den entsprechenden Korrekturwertgebern 34 und 36 gespeichert und während der eigentlichen Aufzeichnungs-Phase zur fortlaufenden Korrektur der Positionsfehler ausgegeben. In der Aufzeichnungs-Phase werden die Startimpulse (T_{S}) in einer Verzögerungsstufe 42 um diejenige Zeit verzögert, die der Laufzeit des Lichtstrahls 2' zwischen dem Impulsgeber 26 und dem gewünschten Zeilenbeginn auf dem Aufzeichnungsmedium 23 entspricht. Ein Taktgenerator 43 erzeugt den Lesetakt für den Digitalspeicher 12. Jeder verzögerte Startimpuls (T_{S}) startet erneut den Lesetakt, so daß jeweils die erste Bildinformation einer Zeile genau am gewünschten Zeilenstart ausgelesen und aufgezeichnet wird.

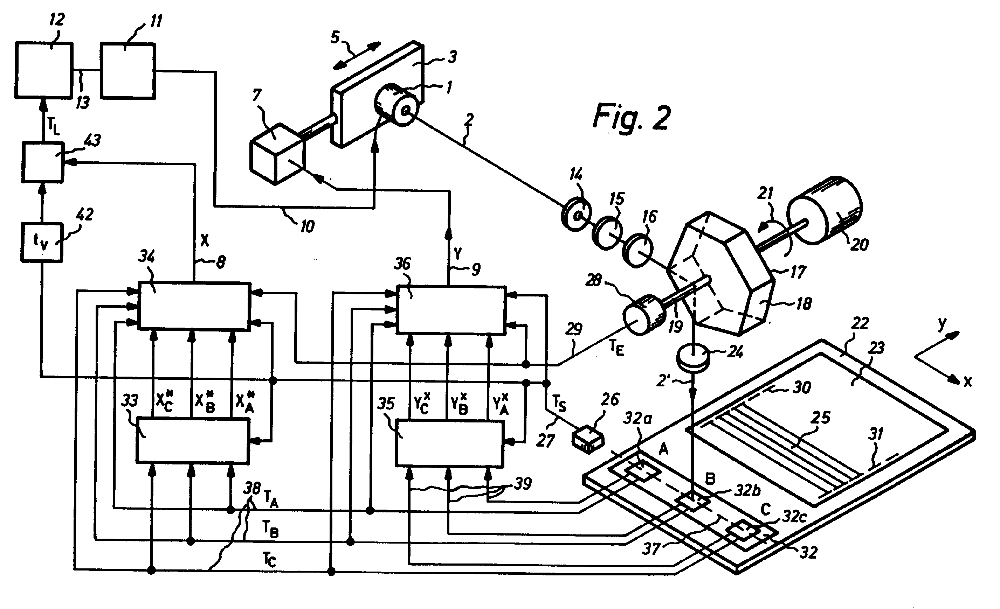

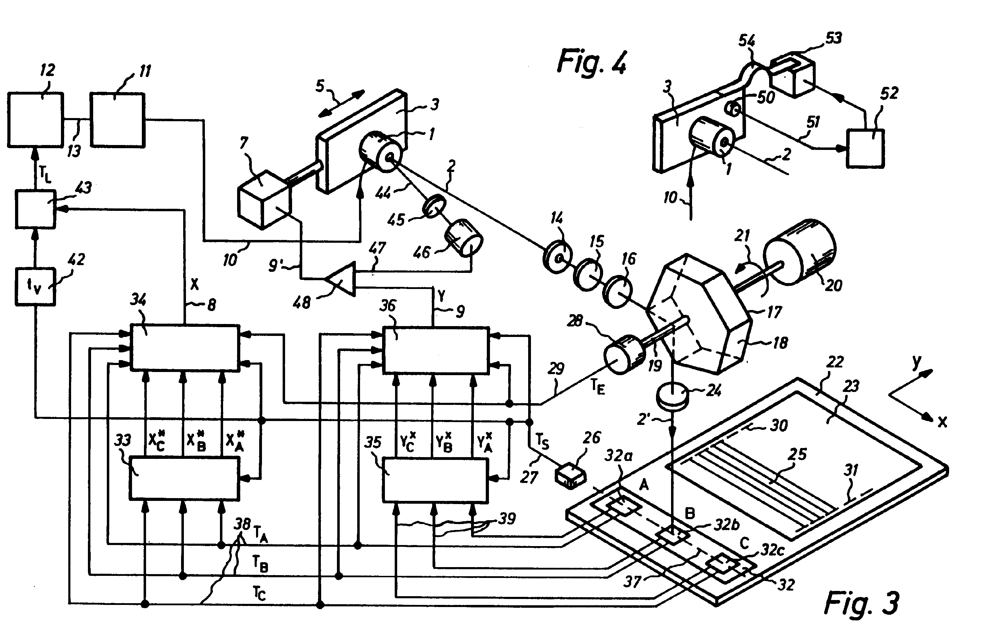

Bezüglich der näheren Offenbarung der Meßanordnung 32, der Meßstufen 33 und 35 und der Korrekturwertgeber 34 und 35 wird auf die Druckschrift EP-B-0054170 verwiesen. In dieser Druckschrift zeigt Fig.2 ein Ausführungsbeispiel für die Meßanordnung 32 und für die Y-Meßstufe 35, Fig.4 ein Ausführungsbeispiel für die X-Meßstufe 33 und Fig.5 ein Ausführungsbeispiel für den X-Korrekturwertgeber 34 bzw. für den identisch aufgebauten Y-Korrekturwertgeber 36.

In einer Weiterbildung zur Verbesserung der Korrekturgenauigkeit weist der X-Korrekturwertgeber 34 und der Y-Korrekturwertgeber 36 je eine Interpolationsstufe auf, in denen aus jedem Korrekturwert-Tripel X_{A}, X_{B} und X_{C} bzw. Y_{A}, Y_{B} und Y_{C} durch lineare Interpolation eine Korrekturfunktion X = f (x) bzw. Y = f (x) für jede Spiegelfläche 18 des Vielflächen-Drehspiegels 17 gebildet wird,wobei (x) die vom abgelenkten Lichtstrahl 2' zurückgelegte Wegstrecke innerhalb einer Spiegelfläche ist. Auf diese Weise wird für jeden Auftreffpunkt des abgelenkten Lichtstrahls 2' ein Korrekturwert definiert und eine kontinuierliche Fehlerkorrektur innerhalb jeder Spiegelfläche 18 durchgeführt, wodurch insbesondere durch nichtebene oder nichtplane Spiegelflächen verursachte Fehler kompensiert und hohe Genauigkeiten erreicht werden.

In der Korrektureinrichtung nach Fig. 1 werden sowohl X-Positionsfehler als auch Y-Positionsfehler kompensiert. Es liegt im Rahmen der Erfindung, die Korrektureinrichtung so abzuändern, daß im Bedarfsfalle jeweils nur die X-Positionsfehler oder nur die Y-Positionsfehler korrigiert werden.

Im Ausführungsbeispiel nach Fig. 1 war der Flying-Spot-Laserscanner als Flachbett-Gerät ausgebildet. Selbstverständlich kann der Flying-Spot-Laserscanner auch ein Trommel-Gerät sein. In diesem Falle ist der Vielflächen-Drehspiegel 17 in bezug auf die Trommel so angeordnet, daß der abgelenkte Lichtstrahl 2' in Axialrichtung (Zeilenrichtung) über die Oberfläche der Trommel geführt wird. In der Meßphase wird dann die Meßanordnung 32 derart zur Trommel positioniert, daß die Referenzlinie 37 in Axialrichtung verläuft.

Fig. 2 zeigt eine Variante der Korrektureinrichtung nach Fig. 1. Der Unterschied zu Fig. 1 besteht darin, daß die Korrektur der X-Positionsfehler nicht durch Verschiebung des Schlittens 3 mit der Laserdiode 1 in Richtung des Pfeiles 4 erfolgt, sondern durch eine entsprechende Ausgabe-Steuerung der Aufzeichnungsdaten aus dem Digitalspeicher 12. Bei dieser Ausführungsform entfällt somit X-Stellstufe 6, und der Schlitten 3 ist entsprechend einfacher aufgebaut, da dieser nur eine Verschiebung in der Richtung des Pfeiles 5 ausführen muß.

Die aus dem X-Korrekturwertgeber 34 ausgegebenen X-Korrekturwerte gelangen jetzt über die Leitung 8 in den Taktgenerator 43 und steuern die Frequenz der Lesetaktfolge (T_{L}) für den Digitalspeicher 12. Die Frequenzsteuerung erfolgt in der Weise, daß die Zeitabstände der Datenausgabe in Abhängigkeit von den festgestellten X-Positionsfehlern des Lichtstrahls 2' geändert und so die X-Positionsfehler durch eine entsprechende Stauchung oder Streckung der Zeilen kompensiert werden. Alternativ zur Frequenzänderung der Lesetaktfolge (T_{L}) kann auch ein durch die X-Korrekturwerte gesteuertes Verzögerungsglied zwischen Digitalspeicher 12 und Treiberstufe 11 vorgesehen werden.

Fig. 3 zeigt eine vorteilhafte Weiterbildung der Korrektureinrichtung nach der Fig. 2 zur Verbesserung der Korrekturgenauigkeit.

Das piezoelektrische Antriebselement in der Y-Stellstufe 7 hat eine nichtlineare Charakteristik, d. h. der Zusammenhang zwischen den elektrischen Korrekturwerten und den daraufhin von dem Antriebselement ausgeführten Längenänderungen bzw. der Verschiebung des Schlittens 3 ist nicht linear. Diese nichtlineare Charakteristik des Antriebselementes wird bei der Positionsfehler-Korrektur in der Korrektur-Phase selbsttätig kompensiert. In der Arbeits-Phase, in der die Positionsfehler-Korrektur nach Maßgabe der in der Meß-Phase ermittelten Korrekturwerte ohne erneute Fehlermessung erfolgt, kann sich aber die nichtlineare Charakteristik des Antriebselementes aufgrund von Temperatureinflüssen und Alterung ändern. In diesem Falle erreicht der Schlitten 3 nicht die durch die Korrekturwerte vorgegebenen Soll-Positionen, was zu fehlerhaften Korrekturablenkungen des Lichtstrahls 2' und damit zu fehlerhaften Positionsfehler-Korrekturen führen würde.

Aus diesem Grunde ist in vorteilhafter Weise in die Korrektureinrichtung der Fig. 3 eine Regelschleife eingeführt, mit der die Positionsfehler des Schlittens 3 und damit der Laserdiode 1 selbsttätig ausgeregelt werden.

Dazu werden zunächst laufend die Ist-Positionen der Laserdiode 1 in Richtung des Pfeiles 5 gemessen, indem aus dem von der Laserdiode 1 erzeugten Licht außerhalb der Nutzapertur der Laserdiode 1 ein Meßstrahl 44 abgeleitet und mittels einer Linse 45 auf einen Positionsdetektor 46 fokussiert wird. Der Positionsdetektor 46 liefert Signalwerte, welche ein Maß für die gemessenen Ist-Positionen der Laserdiode 1 sind, über eine Leitung 47 an einen Vergleicher 48. Die aus dem Y-Korrekturwertgeber 36 ausgelesenen Korrekturwerte, die ein Maß für die Soll-Positionen der Laserdiode 1 sind, werden über die Leitung 9 an den Vergleicher 48 gegeben. In dem Vergleicher 48 werden somit die Positions-Abweichungen zwischen den Soll- und Ist-Positionen der Laserdiode 1 festgestellt, und als Signal über die Leitung 41' zur Steuerung der Y-Stellstufe 7 gegeben. Der Positions-detektor 46 kann beispielsweise eine Differenzfotodiode sein.

Eine solche Regelschleife kann selbstverständlich auch in der Korrektureinrichtung nach Fig. 1 zwischen X-Korrekturwertgeber 34 und X-Stellstufe 6 und/oder zwischen Y-Korrekturwertgeber 36 und Y-Stellstufe 7 geschaltet werden.

Durch die Regelschleife wird somit das Temperatur- und Langzeit-Verhalten der piezoelektrischen Antriebselemente kompensiert, wodurch in vorteilhafter Weise die Genauigkeit der Positionsfehler-Korrektur erhöht und die erforderliche Häufigkeit der Abgleichvorgänge reduziert wird.

Fig. 4 zeigt eine andere Weiterbildung, die in den Einrichtungen nach den Fig. 1 bis 3 Anwendung finden kann.

Es hat sich als zweckmäßig ewiesen, zur Steigerung der Korrekturgenauigkeit die Temperatur des Gehäuses der Laserdiode 1 zu regeln. Dazu befindet sich ein Temperaturführer 50 auf dem Schlitten 3, der thermisch mit dem Gehäuse der Laserdiode 1 gekoppelt ist. Der Temperaturfühler 50 gibt ein von der gemessenen Temperatur abhängiges Signal über eine Leitung 51 an eine Temperaturregelstufe 52 ab, die einen entsprechenden Steuerstrom auf einer Leitung 52 für ein Kühlelement 53 (Peltier-Element) erzeugt. Das stationäre Kühlelement 53 ist thermisch über eine flexible Temperatur-Übernahmebrücke 54 mit dem beweglichen Schlitten 3 verbunden. Entsprechend der erforderlichen Temperaturänderung kühlt oder erwärmt der Steuerstrom das Kühlelement 53, wobei Wärme über die Termperatur-Übernahmebrücke 54 zum Schlitten 3 transportiert oder von diesem abgeführt wird.

## Patentansprüche

1. Verfahren zur Korrektur der Positionsfehler eines durch ein Ablenksystem (17) mit mindestens einer Spiegelfläche (18) punkt- und zeilenweise über eine Fläche (22), die sich quer zur Zeilenrichtung relativ zum Ablenksystem (17) bewegt, abgelenkten Lichtstrahls (2), bei dem
a) der Lichtstrahl (2) mittels einer Laserdiode (1) erzeugt wird, die quer zur Richtung des austretenden Lichtstrahls (2) in Abhängigkeit von Korrekturwerten verschiebbar ist,
b) vor dem eigentlichen Betrieb für jede Spiegelfläche (18) des Ablenksystems (2) eine Anzahl von Positionsfehlern des Lichtstrahls in Zeilenrichtung (X-Positionsfehler) und senkrecht dazu (Y-Positionsfehler) an in Zeilenrichtung orientierten Meßpunkten (A,B,C) im Bereich der Fläche (22) gemessen werden,
c) für jede Spiegelfläche (18) des Ablenksystems (17) mindestens ein X-Korrekturwert und ein Y-Korrekturwert erzeugt werden,
d) die Laserdiode (1) in Abhängigkeit von den Y-Korrekturwerten derart verschoben wird, daß der auf die Fläche (22) auftreffende Lichtstrahl (2) zur Beseitigung der Y-Positionsfehler eine Korrekturverschiebung senkrecht zur Zeilenrichtung erfährt,
e) die Korrekturwerte bei gleichzeitiger Überprüfung der Positionsfehler so lange geändert werden, bis die Positionsfehler kompensiert sind und die zur Kompensation erforderlichen Korrekturwerte gespeichert werden, und
f) die für die einzelnen Spiegelflächen (18) ermittelten und gespeicherten Korrekturwerte während des eigentlichen Betriebes zur laufenden Fehlerkompensation in Synchronismus mit der Bewegung des Ablenksystems (17) ausgegeben werden.

2. Verfahren nach Anspruch 1, bei dem die Laserdiode (1) in Abhängigkeit von X-Korrekturwerten derart verschoben wird, daß der auf die Fläche (22) auftreffende Lichtstrahl (2) zur Beseitigung der X-Positionsfehler eine Korrekturverschiebung in Zeilenrichtung erfährt.

3. Verfahren nach Anspruch 1, bei dem
a) der Lichtstrahl (2) zum Zwecke einer zeilenweisen Aufzeichnung auf der Fläche (22) in Abhängigkeit von einem Bildsignal intensitätsmoduliert wird, und
b) die X-Positionsfehler zeilenweise durch eine von den X-Korrekturwerten gesteuerte Laufzeitänderung des Bildsignals korrigiert werden.

4. Verfahren nach Anspruch 1, bei dem
a) der Lichtstrahl (2) zum Zwecke einer zeilenweisen Aufzeichnung auf der Fläche (22) in Abhängigkeit von Bilddaten intensitätsmoduliert wird, die mittels eines Lesetaktes aus einem Speichermedium (12) ausgelesen werden, und
b) die X-Positionsfehler durch eine durch die X-Korrekturwerte gesteuerte Frequenzänderung des Lesetaktes korrigiert werden.

5. Verfahren nach einem der Ansprüche 1 bis 4, bei dem für jede Spiegelfläche (18) aus den zugeordneten Korrekturwerten durch Interpolation Korrekturfunktionen erzeugt werden.

6. Verfahren nach einem der Ansprüche 1 bis 5, bei dem als Ablenksystem (17) ein Vielflächen-Drehspiegel (Polygon-Spiegel) verwendet wird.

7. Verfahren nach einem der Ansprüche 1 bis 6, bei dem
a) zur Bestimmung der Y-Positionsfehler jeweils ein photoelektrisches Meßorgan (32a; 32b; 32c) mit zwei quer zur Zeilenrichtung angeordneten photoempfindlichen Flächen verwendet wird und
b) die Photoströme der Flächen integriert und durch Differenzbildung der integrierten Photoströme die Y-Positionsfehler ermittelt werden.

8. Verfahren nach Anspruch 7, bei dem als Meßorgan (32a; 32b; 32c) eine Differential-Fotodiode verwendet wird.

9. Verfahren nach einem der Ansprüche 1 bis 8, bei dem die X-Positionsfehler durch Laufzeitdifferenz-Messungen des Lichtstrahls (2) zwischen den Meßpunkten (A;B;C) festgestellt werden.

10. Verfahren nach einem der Ansprüche 1 bis 9, bei dem die Temperatur des Gehäuses der Laserdiode (1) auf einen konstanten Wert geregelt wird.

11. Verfahren nach einem der Ansprüche 1 bis 10, bei dem der Lichtstrahl (2) durch die Laserdiode (1) intensitätsmoduliert wird.

12. Verfahren nach einem der Ansprüche 1 bis 11, bei dem
a) bei der Verschiebung der Laserdiode (1) die tatsächlichen Ist-Positionen der Laserdiode (1) festgestellt werden,
b) die Ist-Positionen mit den durch die Korrekturwerte vorgegebenen Soll-Positionen der Laserdiode (1) verglichen werden und
c) die Verschiebung der Laserdiode (1) durch die beim Vergleich festgestellten Positionsabweichungen gesteuert wird.

13. Verfahren nach Anspruch 12, bei dem
a) von dem durch die Laserdiode (1) erzeugten Lichtstrahl (2) ein außerhalb der Nutzungsapertur der Laserdiode (1) liegender Meßstrahl (44) abgeleitet wird, und
b) die Ist-Positionen der Laserdiode (1) durch Feststellen der Lage des Meßstrahls (44) mit Hilfe eines Positionsdetektors (46) festgestellt werden.

14. Einrichtung zur Korrektur von Positionsfehlern eines durch ein Ablenksystem (17) mit mindestens einer Spiegelfläche (18) punkt- und zeilenweise über eine Fläche (22), die quer zur Zeilenrichtung relativ zum Ablenksystem bewegbar ist, abgelenkten Lichtstrahls (2), bestehend aus
a) einer Laserdiode (1) zur Erzeugung des abzulenkenden Lichtstrahls (2),
b) einem verschiebbaren Schlitten (3), auf dem die Laserdiode (1) angeordnet ist,
c) einer in der Fläche (22) angeordnete Maßanordnung (32) mit einer Vielzahl von in Zeilenrichtung ausgerichteten Meßorganen (32a; 32b; 32c) zur Messung von Abweichungen des abgelenkten Lichtstrahls (2) in der Fläche (22),
d) einer X-Meßstufe (33) und einer Y-Meßstufe (35), welche mit den Meßorganen (32a; 32b; 32c) verbunden sind, zur Ermittlung von Positionsfehlern des Lichtstrahls (2) in Zeilenrichtung (X-Positionsfehler) und senkrecht dazu (Y-Positionsfehler) aus den gemessenen Abweichungen,
e) einem X-Korrekturwertgeber (34) und einem Y-Korrekturwertgeber (35), die mit der X-Meßstufe (33), der Y-Meßstufe (35) und mit den Meßorganen (32a; 32b; 32c) verbunden sind, zur Erzeugung, Änderung und Speicherung von X-Korrekturwerten und Y-Korrekturwerten,
f) einer durch die Y-Korrekturwerte steuerbare Y-Stellstufe (7), welche an den Y-Korrekturwertgeber (36) angeschlossen und mechanisch mit dem Schlitten (3) gekoppelt ist, zur Verschiebung des Schlittens (3) derart, daß der abgelenkte Lichtstrahl (2) zur Beseitigung der Y-Positionsfehler eine Korrekturverschiebung senkrecht zur Zeilenrichtung erfährt, und aus
g) Mitteln (26; 28) zur Synchronisierung der Ausgabe der Korrekturwerte aus den Korrekturwertgebern (34; 36) mit der Bewegung des Ablenksystems (17).

15. Einrichtung nach Anspruch 14, weiterhin enthaltend eine durch die X-Korrekturwerte steuerbare X-Stellstufe (6), welche an den X-Korrekturwertgeber (34) angeschlossen und mechanisch mit dem Schlitten (3) gekoppelt ist, zur Verschiebung des Schlittens (3) derart, daß der abgelenkte Lichtstrahl (2) zur Beseitigung der X-Positionsfehler eine Korrekturverschiebung in Zeilenrichtung erfährt.

16. Einrichtung nach Anspruch 14 zur zeilenweisen Aufzeichnung auf der Fläche (22) weiterhin enthaltend
a) einen Digitalspeicher (12) zur Speicherung von Bilddaten,
b) eine Treiberstufe (11), welche an den Digitalspeicher (12) und die Laserdiode (1) angeschlossen ist, zur Intensitätsmodulation der Laserdiode (1) in Abhängigkeit von den Bilddaten, und
c) einen an den Digitalspeicher (12) und den X-Korrekturwertgeber (34) angeschlossenen Taktgenerator (43) zur Erzeugung des Lesetaktes für den Digitalspeicher (12), wobei der Lesetakt durch die X-Korrekturwerte zwecks Beseitigung der X-Positionsfehler in der Frequenz geändert wird.

17. Einrichtung nach einem der Ansprüche 14 bis 16, bei dem die Meßorgane (32a; 32b; 32c) für die Y-Abweichungen Differential-Fotodioden sind.

18. Einrichtung nach einem der Ansprüche 14 bis 17, weiterhin enthaltend
a) eine im Lichtstrahl (2) der Laserdiode (1) angeordnete Linse (45) zur Erzeugung eines außerhalb der Nutzapertur der Laserdiode (1) liegenden Meßstrahls (44),
b) einen im Meßstrahl (44) liegenden Positionsdetektor (46) zur Feststellung der Ist-Positionen der Laserdiode (1), und
c) mindestens einen Vergleicher (48), dessen Eingänge mit dem Positionsdetektor (46) und einem der Korrekturwertgeber (34;36) verbunden sind und dessen Ausgang an eine der Stellstufen (6; 7) angeschlossen ist.

## Claims

1. A method for correcting position errors of a beam of light (2), deflected by a deflection system (17) with at least one mirror surface (18) by points and lines over a surface (22) which moves transversely to the line direction relative to the deflection system (17), in which
a) the beam of light (2) is produced by means of a laser diode (1), which is displaceable transversely to the direction of the emerging beam of light (2) as a function of correction values,
b) before the actual operation, for each mirror surface (18) of the deflection system (2) a number of position errors of the light beam are measured in line direction (X position errors) and perpendicularly thereto (Y position errors) at measurement points (A,B,C) in the region of the surface (22), oriented in line direction,
c) for each mirror surface (18) of the deflection system (17) at least one X correction value and one Y correction value are produced,
d) the laser diode (1) is displaced as a function of the Y correction values such that the light beam (2) striking the surface (22) undergoes a correction displacement perpendicularly to the line direction to eliminate the Y position error,
e) the correction values are altered with simultaneous checking of the position errors until the position errors are compensated and the correction values necessary for compensation are stored, and
f) the correction values determined and stored for the individual mirror surfaces (18) are emitted during the actual operation for the continuous error compensation in synchronism with the movement of the deflection system (17).

2. A method according to Claim 1, in which the laser diode (1) is displaced as a function of X correction values such that the light beam (2) striking the surface (22) undergoes a correction displacement in line direction to eliminate the X position errors.

3. A method according to Claim 1, in which
a) the light beam (2) is intensity modulated for the purpose of a recording by lines on the surface (22) as a function of an image signal, and
b) the X position errors are corrected by lines by an alteration to the running time of the image signal, controlled by the X correction values.

4. A method according to Claim 1, in which
a) the light beam (2) is intensity modulated for the purpose of a recording by lines on the surface (22) as a function of image data, which are read out by means of a reading cycle from a memory medium (12), and
b) the X position errors are corrected by a frequency alteration of the reading cycle, controlled by the X correction values.

5. A method according to one of Claims 1 to 4, in which correction functions are produced for each mirror surface (18) from the associated correction values by interpolation.

6. A method according to one of Claims 1 to 5, in which a multi-faced revolving mirror (polygonal mirror) is used as deflection system (17).

7. A method according to one of Claims 1 to 6, in which
a) to determine the Y position errors in each case a photoelectric measurement element (32a;32b;32c) with two photosensitive faces arranged transversely to the line direction is used and
b) the photocurrents of the faces are integrated and the Y position errors are determined by difference formation of the integrated photocurrents.

8. A method according to Claim 7, in which a differential photodiode is used as measurement element (32a; 32b; 32c).

9. A method according to one of Claims 1 to 8, in which the X position errors are established by running time difference measurements of the light beam (2) between the measurement points (A;B;C).

10. A method according to one of Claims 1 to 9, in which the temperature of the housing of the laser diode (1) is regulated to a constant value.

11. A method according to one of Claims 1 to 10, in which the light beam (2) is intensity modulated by the laser diode (1).

12. A method according to one of Claims 1 to 11, in which
a) in the displacement of the laser diode (1) the effective actual positions of the laser diode (1) are established,
b) the actual positions are compared with the nominal positions of the laser diode (1), given by the correction values and
c) the displacement of the laser diode (1) is controlled by the position deviations which are established during the comparison.

13. A method according to Claim 12, in which
a) a measurement beam (44) lying outside the effective aperture of the laser diode (1) is diverted from the light beam (2) produced by the laser diode(1), and
b) the actual positions of the laser diode (1) are established by establishing the position of the measurement beam (44) with the aid of a position detector (46).

14. An arrangement for the correction of position errors of a light beam (2), deflected by a deflection system (17) with at least one mirror surface (18) by points and lines over a surface (22) which is movable transversely to the line direction relative to the deflection system, consisting of
a) a laser diode (1) for the production of the light beam (2) which is to be deflected,
b) a displaceable sliding carriage (3), on which the laser diode (1) is arranged,
c) a measurement arrangement (32), arranged in the surface (22), with a plurality of measurement elements (32a;32b;32c) aligned in line direction, for the measurement of deviations of the deflected light beam (2) in the surface (22),
d) an X measurement stage (33) and a Y measurement stage (35) which are connected with the measurement elements (32a;32b;32c), to determine position errors of the light beam (2) in line direction (X position errors) and perpendicularly thereto (Y position errors) from the measured deviations,
e) an X correction value indicator (34) and a Y correction value indicator (35), which are connected with the X measurement stage (33), the Y measurement stage (35) and with the measurement elements (32a;32b;32c), for the production, alteration and storage of X correction values and Y correction values,
f) a Y adjustment stage (7) controllable by the Y correction values, which stage is connected to the Y correction value indicator (36) and is mechanically coupled with the sliding carriage (3), for the displacement of the sliding carriage (3) such that the deflected light beam (2) undergoes a correction displacement perpendicularly to the line direction to eliminate the Y position errors, and of
g) means (26;28) for the synchronisation of the output of the correction values from the correction value indicators (34;36) with the movement of the deflection system (17).

15. An arrangement according to Claim 14, further containing an X adjustment stage (6), controllable by the X correction values, which stage is connected to the X correction value indicator (34) and is mechanically coupled with the sliding carriage (3), for the displacement of the sliding carriage (3) such that the deflected light beam (2) undergoes a correction displacement in line direction to eliminate the X position errors.

16. An arrangement according to Claim 14 for the recording, by lines, on the surface (22), further containing
a) a digital memory (12) for the storage of image data,
b) a driver stage (11), which is connected to the digital memory (12) and the laser diode (1), for the intensity modulation of the laser diode (1) as a function of the image data, and
c) a cycle generator (43) connected to the digital memory (12) and the X correction value indicator (34) for the production of the reading cycle for the digital memory (12), in which the reading cycle is altered in frequency by the X correction values for the purpose of elimination of the X position errors.

17. An arrangement according to one of Claims 14 to 16, in which the measurement elements (32a;32b;32c) for the Y deviations are differential photodiodes.

18. An arrangement according to one of Claims 14 to 17, further containing
a) a lens (45) arranged in the light beam (2) of the laser diode (1) for the production of a measurement beam (44) lying outside the effective aperture of the laser diode (1),
b) a position detector (46) lying in the measurement beam (44) for the establishment of the actual positions of the laser diode (1), and
c) at least one comparator (48), the inputs of which are connected with the position detector (46) and one of the correction value indicators (34;36) and the output of which is connected to one of the adjustment stages (6;7).

## Revendications

1. Procédé de correction de défaut de positionnement d'un faisceau lumineux (2) dévié par un système de déflexion (17) avec au moins une surface de miroir (18), point par point et ligne par ligne sur une surface (22) qui se déplace transversalement à la direction des lignes par rapport au système de déflexion (17), selon lequel :
a) le faisceau lumineux (2) est généré par une diode laser (1) qui coulisse transversalement à la direction du faisceau lumineux (2) émis, en fonction des valeurs de correction,
b) avant la mise en oeuvre proprement dite, pour chaque surface de miroir (18) du système de déflexion (2), on mesure un certain nombre de défauts de position du faisceau lumineux dans la direction de lignes (défaut de position X) et perpendiculairement à cette direction (défaut de position Y) aux points de mesure (A, B, C) orientés dans la direction des lignes, au niveau de la surface (22),
c) pour chaque surface de miroir (18) du système de déflexion (17) on crée au moins une valeur de correction (X) et au moins une valeur de correction (Y),
d) on déplace la diode laser (1 en fonction des valeurs de correction (Y) pour que le faisceau lumineux (2) qui arrive sur la surface (22) subisse un déplacement de correction perpendiculairement à la direction des lignes pour éliminer le défaut de position (Y),
e) on modifie les valeurs de correction tout en contrôlant les défauts de position jusqu'à ce que les défauts de position soient compensées et on enregistre les valeurs de correction nécessaires à la compensation et
f) pendant le fonctionnement proprement dit on appelle les valeurs de correction obtenues et enregistrées pour les différentes surfaces de miroirs (18) pour supprimer en permanence les défauts, en synchronisme avec le déplacement du système de déflexion (17).

2. Procédé selon la revendication 1, selon lequel la diode laser (1) est déplacée en fonction des valeurs de correction (X) pour que le faisceau lumineux (2) arrivant sur la surface (22) subisse un déplacement de correction dans la direction des lignes pour supprimer le défaut de position (X).

3. Procédé selon la revendication 1, selon lequel :
a) on module l'intensité du faisceau lumineux (2) pour une inscription ligne par ligne sur la surface (22) en fonction d'un signal image et
b) on corrige le défaut de position (X), ligne par ligne par une modification du temps de parcours du signal image commandé à partir des valeurs de correction (X).

4. Procédé selon la revendication 1, selon lequel :
a) pour une inscription ligne par ligne sur la surface (22) on module l'intensité du faisceau lumineux (2) en fonction des données de l'image, ces données étant lues à la cadence de lecture dans une mémoire (12) et
b) on corrige les défauts de position (X) par une variation de fréquence de la cadence de lecture, commandée par les valeurs de correction (X).

5. Procédé selon l'une des revendications 1 à 4, selon lequel, pour chaque surface image (18) on crée des valeurs de correction par des fonctions de correction à interpolation.

6. Procédé selon l'une des revendications 1 à 5, selon lequel on utilise comme système de déflexion (17) un miroir tournant à facettes multiples (miroir polygonal).

7. Procédé selon l'une des revendications 1 à 6, selon lequel :
a) pour déterminer le défaut de position (Y) on utilise chaque fois un organe de mesure photo-électrique (32a ; 32b ; 32c) dont des surfaces photo-sensibles sont disposées transversalement à la direction des lignes et
b) on intègre les courants photo-électriques des surfaces et par formation de différences de ces courants photo-électriques intégrés, on obtient le défaut de position (Y).

8. Procédé selon la revendication 7, selon lequel l'organe de mesure (32a ; 32b ; 32c) est une photo-diode différentielle.

9. Procédé selon l'une des revendications 1 à 8, selon lequel on fixe les défauts de position (X) par des mesures de temps de parcours du faisceau lumineux (2) entre les points de mesure (A ; B ; C).

10. Procédé selon l'une des revendications 1 à 9, selon lequel on régule la température du boîtier de la diode laser (2) à une valeur constante.

11. Procédé selon l'une des revendications 1 à 10, selon lequel on module l'intensité du faisceau lumineux (2) par la diode laser (1).

12. Procédé selon l'une des revendications 1 à 11, selon lequel :
a) lors du déplacement de la diode laser (1) on détermine la position réelle effective de la diode laser (1),
b) on compare les positions réelles aux positions de consigne données par les valeurs de correction pour la diode laser (1) et
c) on commande le déplacement de la diode laser (1) par les déviations de position obtenues par la comparaison.

13. Procédé selon la revendication 12, selon lequel :
a) on déduit du faisceau lumineux (2) généré par la diode laser (1), un faisceau de mesure (44) situé à l'extérieur de l'ouverture utile de la diode laser (1) et
b) on détermine les positions réelles de la diode laser (1) en déterminant la position du faisceau de mesure (44) à l'aide d'un détecteur de position
(46).

14. Installation de correction des défauts de position d'un faisceau lumineux (2) dévié par un système de déflexion (17) comprenant au moins une surface de miroir (18), point par point et ligne par ligne sur une surface (22) qui se déplace transversalement à la direction des lignes par rapport au système de déflexion, installation comprenant :
a) une diode laser (1) créant le faisceau lumineux (2) à dévier,
b) un chariot coulissant (3) portant la diode laser (1),
c) une installation de mesure (32) prévue dans la surface (22) avec un grand nombre d'organes de mesure (32a ; 32b ; 32c) alignés dans la direction des lignes pour mesurer les différences du faisceau lumineux (2) dévié dans la surface (22),
d) un étage de mesure (X) (33) et un étage de mesure (Y) (35) reliés aux organes de mesure (32a ; 32b ; 32c) pour déterminer les défauts de position du faisceau lumineux (2) dans la direction des lignes (défaut de position X) et perpendiculairement à la direction des lignes (défaut de position Y) à partir des déviations mesurées,
e) un générateur de valeur de correction (X) (34) et un générateur de valeur de correction (Y) (35) reliés à l'étage de mesure (X) (33), à l'étage de mesure (Y) (35) et aux organes de mesure (32a ; 32b ; 32c) pour créer, modifier et enregistrer les valeurs de correction (X) et les valeurs de correction (Y),
f) un étage de réglage (Y) commandé par les valeurs de correction (Y), étage relié au générateur de valeurs de correction (Y) (36) et couplé mécaniquement au chariot (3) pour déplacer le chariot (3) pour que le faisceau lumineux dévié (2) subisse une translation de correction perpendiculairement à la direction des lignes pour supprimer les défauts de position (Y) et
g) des moyens (26 ; 28) pour synchroniser l'émission des valeurs de correction par les générateurs de valeurs de correction (34 ; 36) en fonction du mouvement du système de déflexion (17).

15. Installation selon la revendication 14, comprenant en outre un étage de réglage (X) (6) commandé par les valeurs de correction (X) et qui est relié au générateur de valeurs de correction (X), (34) en étant couplé mécaniquement au chariot (3) pour déplacer le chariot (3) afin que le faisceau lumineux (2) dévié subisse un déplacement de correction dans la direction des lignes, pour supprimer le défaut de position (X).

16. Installation selon la revendication 14 pour l'inscription ligne par ligne sur une surface (22), comprenant en outre :
a) une mémoire numérique (12) pour enregistrer des données images,
b) un étage pilote (11) auquel sont reliées la mémoire numérique (12) et la diode laser (1) pour moduler l'intensité de la diode laser (1) en fonction des données images et
c) un générateur d'horloge (43) relié à la mémoire numérique (12) et au générateur de valeurs de correction (X) (34) pour créer la cadence de lecture de la mémoire numérique (12), la cadence de lecture étant modifiée en fréquence par les valeurs de correction (X) pour supprimer les défauts de position (X).

17. Installation selon l'une des revendications 14 à 16, selon laquelle les organes de mesure (32a ; 32b ; 32c) des déviations (Y) sont des photo-diodes différentielles.

18. Installation selon l'une des revendications 14 à 17, comprenant en outre :
a) une lentille (45) placée dans le faisceau lumineux (2) de la diode laser (1) pour créer un faisceau de mesure (44) situé au-delà de l'ouverture utile de la diode laser (1),
b) un détecteur de position (46) situé dans le faisceau de mesure (44) pour déterminer les positions réelles de la diode laser (1) et
c) au moins un comparateur (48) dont les entrées sont reliées au détecteur de position (46) et l'un des générateurs de valeurs de correction (34, 36) et dont la sortie est reliée à l'un des étages de réglage (6, 7).
